# EUROPEAN PATENT SPECIFICATION

(11) **EP 1 994 457 B1**
(45) Date of publication and mention of the grant of the patent: **13.06.2012**
(21) Application number: 07753143.2
(22) Date of filing: 14.03.2007
(51) Int. Cl.: F04B 49/00, F04D 27/02, B01D 53/00

(54) **METHOD AND APPARATUS FOR IMPROVED OPERATION OF AN ABATEMENT SYSTEM**
VERFAHREN UND VORRICHTUNG FÜR DEN VERBESSERTEN BETRIEB EINES VERMINDERUNGSSYSTEMS
PROCÉDÉ ET APPAREIL PERMETTANT D'AMÉLIORER LE FONCTIONNEMENT D'UN SYSTÈME DE RÉDUCTION DE POLLUTION

(30) Priority: 16.03.2006 US 783370 P; 16.03.2006 US 783337 P; 16.03.2006 US 783374 P; 19.02.2007 US 890609 P
(43) Date of publication of application: 26.11.2008
(73) Proprietor: Applied Materials, Inc., Santa Clara, CA 95054 (US)
(72) Inventor: PORSHNEV, Peter, San Jose, CA 95132 (US); CURRY, Mark, W., Morgan Hill, CA 95037 (US); RAOUX, Sebastien, Santa Clara, CA 95051 (US)
(74) Representative: Peterreins, Frank
(86) International application number: PCT/US2007/006494
(87) International publication number: WO 2007/109081

(56) References cited:
- WO-A1-2004/064983
- US-A- 3 918 915
- US-A- 4 701 187
- US-A- 4 820 319
- US-A- 5 004 483
- US-A- 5 759 237
- US-A- 5 795 237
- US-A- 5 976 222
- US-A1- 2002 134 233
- US-A1- 2003 017 087
- US-A1- 2003 149 547
- US-A1- 2005 238 549
- US-B1- 6 227 347

## Description

### FIELD OF THE INVENTION

The invention relates generally to electronic device manufacturing systems, and more specifically to methods and apparatus for improved operation of an abatement system.

### BACKGROUND OF THE INVENTION

Electronic device manufacturing tools conventionally employ chambers or other suitable apparatus adapted to perform processes (e.g., chemical vapor deposition, epitaxial silicon growth, etch, etc.) to manufacture electronic devices. Such processes may produce effluents having undesirable chemicals as by-products of the processes. Conventional electronic device manufacturing systems may use abatement apparatus to treat the effluents.

Conventional abatement units and processes employ a variety of resources (e.g., reagents, water, electricity, etc.) to treat the effluents. Such abatement units typically operate with little information about the effluents being treated by the abatement units. Accordingly, conventional abatement units may sub-optimally use the resources. Sub-optimal use of the resources may be an undesirable cost burden in a production facility. In addition, more frequent maintenance may be required for abatement units that do not use resources optimally.

Accordingly, a need exists for improved methods and apparatus for abating effluents.

WO 2004/064983 A1 discloses a substrate processing apparatus has a process chamber and an effluent treatment reactor.

U.S. Pat. No. 5,759,237 shows processes and systems to recover at least on perfluorocompound gas from a gas mixture.

U.S. Publ. No. 2003/0017087 A1 discloses a method and apparatus for abating F₂ from byproducts generated during cleaning of a processing chamber.

U.S. Publ. No. 2002/0134233 A1 discloses a method for reducing PFC emissions during a semiconductor manufacturing process.

U.S. Publ. No. 2003/0149547 A1 presents a method for diagnosing failure of a manufacturing apparatus.

U.S. Publ. No. 2005/0238549 A1 shows an electronic control system for regulating operational parameters in a pollution removal system.

### SUMMARY OF THE INVENTION

The present invention relates to an electronic device manufacturing system according to claim 1 and a method according to claim 10. Preferred embodiments are described in the dependent claims.

In one aspect of the invention, an apparatus is provided that includes (1) an interface adapted to analyze information about an electronic device manufacturing system that produces an effluent having an undesirable material, and provide information about the effluent, and (2) an abatement system adapted to receive information about the effluent, receive the effluent, and attenuate the undesirable material.

In another aspect of the invention, a method is provided comprising receiving information with an abatement system. The information is about an effluent having an undesirable material. The method further includes receiving the effluent.

Other features and aspects of the present invention will become more fully apparent from the following detailed description, the appended claims and the accompanying drawings.

### BRIEF DESCRIPTION OF THE DRAWINGS

FIG. 1 is a schematic drawing depicting an electronic device manufacturing system having an electronic device manufacturing tool, a pump, an interface, and an abatement system in accordance with the present invention.
FIG. 2 is a flowchart depicting a method of adjusting an abatement system in accordance with an embodiment of the present invention.
FIG. 3 is a curve illustrating an exemplary relationship between destruction efficiency and plasma power used by the plasma abatement system employing the exemplary abatement process in accordance with the present invention.
FIG. 4 is a curve illustrating an exemplary relationship between destruction efficiency and a flow of water as a reactant in the plasma abatement system employing the exemplary abatement process in accordance with the present invention.

### DETAILED DESCRIPTION

The present invention relates to methods and apparatus for optimizing the abatement of undesirable material produced during electronic device manufacturing. More specifically, the present invention relates to optimizing abatement systems that are adapted to attenuate or eliminate undesirable material in an effluent of an electronic device manufacturing tool.

An optimized abatement system may attenuate or eliminate undesirable material during an abatement process. The abatement process may use different types and/or amounts of resources for different undesirable materials in the effluent. By employing an optimized amount and/or type of the resources for the undesirable material, the optimized abatement system may minimize use of the resources.

Abatement resources may be optimized through knowledge of the amount and/or type of materials to be abated. Accordingly, in at least one embodiment of the invention, the amount and/or type of material to be abated from an effluent is determined during the abatement process (e.g., insitu and/or in real time) and based on information previously obtained from a reference system as will be described below.

For example, by using only the amount of power required to attenuate undesirable material, less power may be employed than would conventionally be used, thereby reducing an operating cost of the abatement system. Other examples may include extending the time between periodic maintenance of the abatement system, higher destruction efficiency of the undesirable material, etc.

The type and amount of undesirable material in the effluent may vary according to the processes performed by the electronic device manufacturing tool. The undesirable material in the effluent may be measured, predicted, etc. Such information may be provided to an interface or another suitable apparatus that is adapted to analyze the information. The interface may provide the results of the analysis to the abatement system; and the abatement system may employ the results to optimally use or otherwise improve use of its abatement resources.

Abatement processes may abate effluents using water, RF power, temperature, natural gas, etc. A destruction efficiency of the abatement process may be related to the amount of resources used. The destruction efficiency is also be related to the type and composition of the effluent. In at least one embodiment, the abatement system is provided information about the type and composition of the effluent (e.g., in-situ and/or in real time and/or based on a reference system). The abatement system uses this information to tailor the use of the resources. Accordingly, the desired destruction efficiency may be achieved without overusing resources.

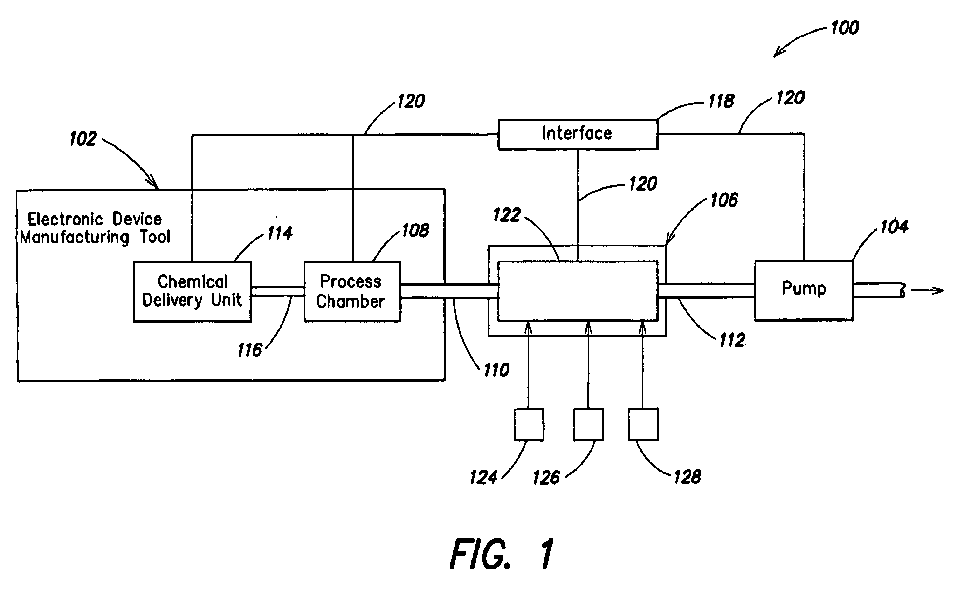

FIG. 1 is a schematic drawing depicting an electronic device manufacturing system having an electronic device manufacturing tool, a pump, an interface, and an abatement system in accordance with the present invention. The electronic device manufacturing system 100 may include an electronic device manufacturing tool 102, a pump 104, and an abatement system 106. The electronic device manufacturing tool 102 may have a process chamber 108. The process chamber 108 may be coupled to the abatement system 106 via a vacuum line 110. The pump 104 may be coupled to the abatement system 106 via a conduit 112. The process chamber 108 may also be coupled to a chemical delivery unit 114 via a fluid line 116. An interface 118 may be coupled to the process chamber 108, the chemical delivery unit 114, the pump 104, and the abatement system 106 via signal lines 120. The abatement system 106 may include a reactor 122 that may be coupled to a power/fuel supply 124, a reactant supply 126, and a cooling supply 128.

The electronic device manufacturing tool 102 may be adapted, by using processes, to manufacture (e.g., fabricate) electronic devices. The processes may be performed in the process chamber 108 at a pressure less than an ambient pressure (e.g., one atmosphere (atm), etc.). For example, some processes may be performed at pressures of about 8 to 700 milli-torr (mTorr), although other pressures may be used. To achieve such pressures the pump 104 may remove the effluent (e.g., gas, plasma, etc.) from the process chamber 108. The effluent may be carried by the vacuum line 110.

Chemical precursors (e.g., SiH4, NF3, CF4, BCl3, etc.) of the effluent being removed by the pump 104 may be added to the process chamber 108 by a variety of means. For example, the chemical precursors may be flowed to the process chamber 108 via the fluid line 116 from the chemical delivery unit 114. In addition, the chemical delivery unit 114 may be adapted to provide information (e.g., pressure, chemical composition, flow rate, etc.), via the signal lines 120, related to the chemical precursors provided by the chemical delivery unit 114 via the signal lines 120.

The interface 118 may be adapted to receive information from the electronic device manufacturing system 100. For example, the interface 118 may receive information related to processes in the process chamber 108. The information may include process information (e.g., process step time, pressure, fluid flows, etc.) and may be provided by a sensor, controller or other suitable apparatus. The interface 118 may use such information to determine additional information, for example, parameters of the effluent.

The interface 118 may also receive information from one or more databases containing information concerning known behaviors of the process-related parameters. The database may be populated with information derived from an instrumented reference system (not shown) having a similar design to the electronic device manufacturing system 100 in which system parameters may be precisely measured over time. The parameter measurements taken by the reference system may be used to derive functions (e.g., best-fit curves, normal distribution equations, etc.) describing the behavior of one or more of the parameters over time, or as a function of one or more other parameters. These functions can be described using constants that can then be organized in a database accessible by the interface 118. The interface 118 may use the information in the database to determine desired and/or optimal values at which to adjust actual parameters of the electronic manufacturing system 100.

The interface 118 may provide the information related to the effluent to the abatement system 106. Such information may be employed to adjust parameters of the abatement system 106. The effluent may be carried by the vacuum line 110 from the process chamber 108 to the abatement system 106. The pump 104 may remove the effluent from the process chamber 108 and move the effluent to the abatement system 106. The abatement system 106 may be adapted to attenuate the undesirable material in the effluent using the power/fuel supply 124, reactant supply 126, and/or cooling supply 128.

In an embodiment, the abatement system 106 may be a plasma abatement system. An exemplary plasma abatement system may be the Litmas system available from Metron Technology, Inc. of San Jose, CA, although other abatement systems may be used. The abatement system 106 may use fuel/power supplied by the fuel/power supply 124, reactants (e.g., water, water vapor, 02, H2, etc.) supplied by the reactant supply 126, and cooling water or another suitable fluid supplied by the cooling supply 128. The abatement system 106 may form plasma that may be employed to attenuate or eliminate undesirable material in the effluent, as will be described in more detail below.

In the same or alternative embodiment, a post-pump abatement system may be included. For example, the abatement system 106 may not be present in the electronic device manufacturing system 100. Instead, the post-pump abatement system may be included downstream from the pump 104. Alternatively, a post pump abatement system may be employed in addition to the abatement system 106. The information related to the effluent may also be provided to the post pump abatement system.

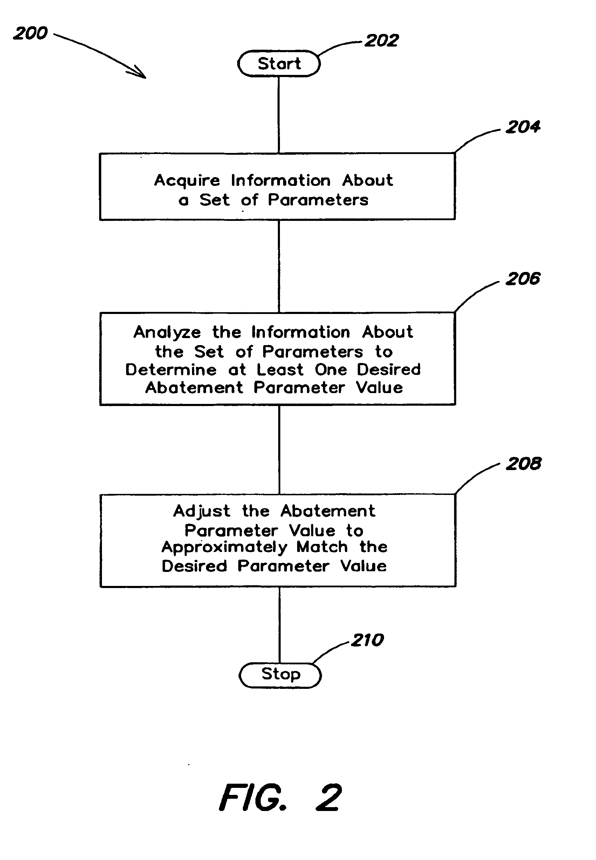

FIG. 2 is a flowchart depicting a method of adjusting an abatement system in accordance with the present invention. The method 200 begins with step 202. Subsequently, in step 204, the interface or another suitable apparatus may acquire information about a set of parameters.

In step 204, the interface may acquire the information from the electronic device manufacturing system, a database, a predictive solution, a reference system, etc. The information may be related to an effluent produced by the electronic device manufacturing system 100. The information may also include the type of abatement system 106 that may be employed by the electronic device manufacturing system 100. Subsequently, step 206 may begin.

In step 206 the interface 118 and/or abatement system 106 may analyze the information acquired in step 204 to determine at least one desired abatement parameter value. For example, the interface may analyze the information to determine that, for the type of abatement system 106, a parameter of the abatement system 106 may need to be adjusted. For example, for a pre-pump plasma abatement system 106 attenuating gaseous chemicals (e.g., perfluorocarbons (PFCs), selected organic compounds (VOCs), etc.) a plasma power may be adjusted. The amount that the gaseous chemicals are attenuated may be proportional to the amount of plasma power is applied to the gaseous chemicals. For example, PFCs may require tens of electrons per molecule to cause any substantial dissociation and thereby attenuate the PFCs to the desired level.

By adjusting the plasma power to an optimal amount, the abatement process may be optimized. An excessive (e.g., more than optimal) amount of plasma power may undesirably damage the reactor 122 walls. More specifically, damage to the reactor 122 walls may be proportional to the amount of electrons per molecule that are present in the plasma. Thus, by providing an optimal amount of plasma power, the reactor 122 may be replaced less often.

In alternative embodiments, adjustments may be made during step 206 to other types of abatement systems 106. For example, a post-pump plasma, catalytic, and/or combustion abatement system 106 may be employed. In the post-pump plasma abatement system 106, the parameters that may be optimally adjusted may include power, purge gas flow, reactant, and coolant flow. For a post-pump catalytic abatement system 106, the parameters that may be adjusted may include purge gas flow, reactant, and coolant flow. For a post-pump combustion catalytic abatement system 106 the parameters that may be optimally adjusted may include fuel flow, purge gas flow, reactant and coolant flow.

After analyzing the information, in step 208, the abatement system may adjust the abatement parameter to match the desired abatement parameter value. For example, the plasma power may be increased to a desired amount due to an increase in the amount of PFCs in the effluent. Subsequently, the method 200 may end in step 210

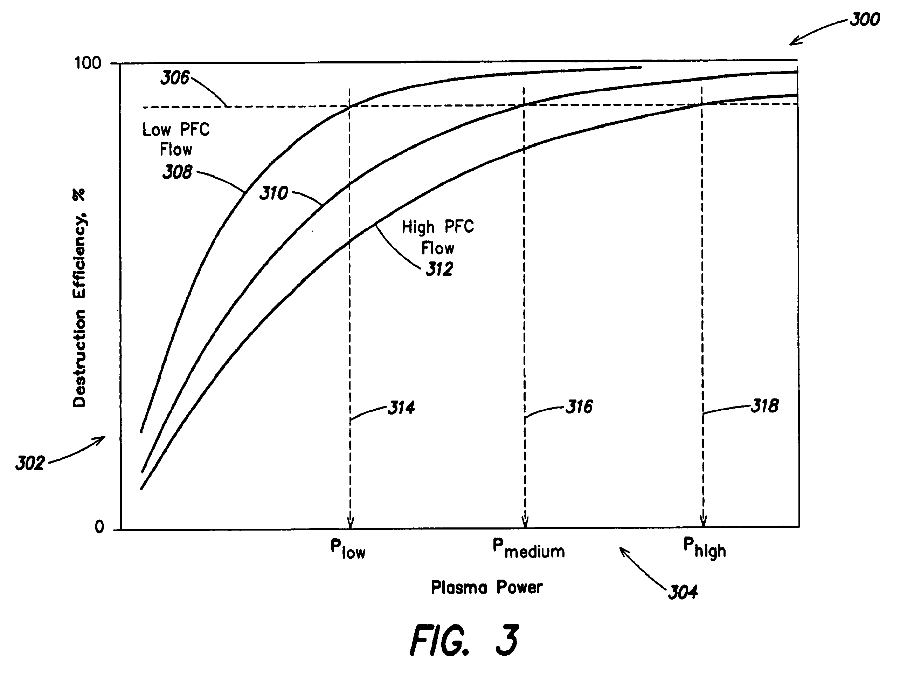

FIG. 3 is a figure depicting a curve showing a relationship between a destruction efficiency and a plasma power used by the plasma abatement system employing the exemplary abatement process in accordance with the present invention. A relationship 300 may be between a destruction efficiency 302 and a plasma power 304 of the abatement process. The undesirable material being attenuated may be PFCs. A desired destruction efficiency 306 may be depicted by a horizontal dashed line. A low PFC flow curve 308, a medium PFC flow curve 310, and a high PFC flow curve 312 may be indicative of the relationship 300 between the destruction efficiency 302 and the plasma power 304 for a flow rate through the abatement system 106. A low power line 314, a medium power line 316, and a high power line 318 may indicate the amount of plasma power 304 applied to the PFCs.

The destruction efficiency 302 of the PFCs may be related to the flow rate of the PFCs. For example, the higher the flow rate through the abatement system 106, the lower the destruction efficiency 302 of the PFC may be at the given plasma power 304. Thus, the plasma power 304 may be adjusted to achieve the desired destruction efficiency 306. The desired destruction efficiency 306 may range from about 85 percent to about 100 percent. For a high PFC flow rate, the high PFC flow curve 312 may be employed to determine the amount of plasma power 304 that may be required to achieve the desired destruction efficiency 306 for a high PFC flow rate. The high power line 318 indicates the amount of plasma power 304 required to achieve the desire destruction efficiency 306. In this manner the appropriate level of plasma power 304 may be selected.

In alternative embodiments, more or fewer plasma power 304 levels may be selected. For example, more than three plasma power 304 levels may be available for selection. More specifically, a continuous range of plasma power 304 may be available for selection. Alternatively, a single power level may be available for an on/off application of plasma power 304 for a flow of low levels of PFC. Likewise, more than three flow rate curves may be available for selecting the appropriate levels of power to achieve the desired destruction efficiency 306. For example, a relationship between the plasma power 304 and the destruction efficiency 302 may be defined over a continuous range of PFC flow rates.

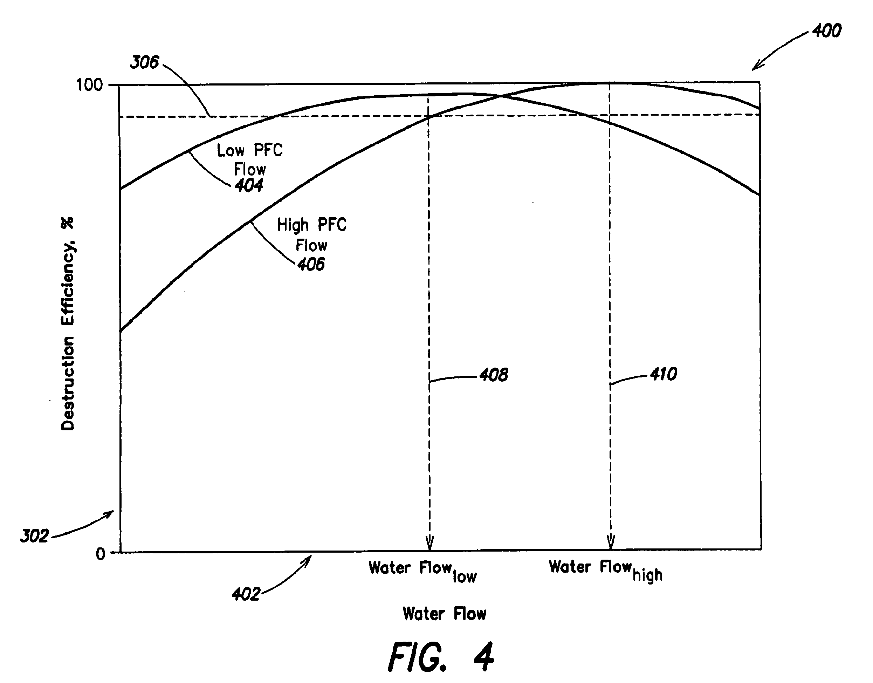

FIG. 4 is a figure depicting a curve showing a relationship between a destruction efficiency and a flow of water as a reactant in the plasma abatement system employing the exemplary abatement process in accordance with the present invention. A relationship 400 between the destruction efficiency 302 and the water flow 402 is depicted by a low PFC flow curve 404 and a high PFC flow curve 406. A water flow low line 408 depicts the peak of the low PFC flow curve 404. A water flow high line 410 depicts the peak of the high PFC flow curve 406.

The desired destruction efficiency 306 may be achieved by adjusting the water 402 to appropriate peak water flow. Although two PFC flow curves are depicted, it is possible that only one curve is employed by the present invention. Alternatively, a continuous spectrum of PFC flows may be employed by the present invention. The present invention may employ such a relationship to determine the appropriate water flow to optimally attenuate the PFC in the effluent.

Additionally, the relationship 400 may be related to chemical reaction of the abatement process. For example, for carbon tetrafluoride (CF4) abatement, hydrogen may be supplied can be supplied as hydrogen oxide (water) according to the reaction CF4 + 2 H2O → CO2 + 4 HF. One can see from the above reaction that one part of CF4 may require two parts of water for complete transformation. Thus, the water flow may be twice the CF4 flow. In some embodiments, a water flow of up to about seven times the CF4 or other PFC gas flow may be employed.

The foregoing description discloses only exemplary embodiments of the invention. Modifications of the above disclosed apparatus and method which fall within the scope of the invention will be readily apparent to those of ordinary skill in the art. For instance, the interface may be included in the electronic device manufacturing tool wherein the abatement system is communicatively coupled with the electronic device manufacturing tool to acquire the information related to the effluent.

Accordingly, while the present invention has been disclosed in connection with exemplary embodiments thereof, it should be understood that other embodiments may fall within the scope of the invention, as defined by the following claims.

## Claims

1. An electronic device manufacturing system (100) comprising:
a process chamber (108);
an interface (118); and
an abatement system (106),
where the process chamber (108) is adapted to perform processes that produce effluents including an undesired material;
where the abatement system (106) is adapted to receive the effluent; and attenuate the undesirable material;
where the interface (118) is adapted to analyze first information about the electronic device manufacturing system (100) and adapted to utilize second information derived from a reference electronic device manufacturing system different from the electronic device manufacturing system (100), to determine one or more parameters for operation of the electronic device manufacturing system (100), wherein the interface (118) is adapted to receive the second information from one or more databases; and
where the electronic device manufacturing system (100) is adapted to operate using the one or more parameters which have been determined by the interface (118).

2. The system of claim 1 wherein the abatement system (106) is adapted to attenuate the undesired material using the one or more parameters which have been determined by the interface (118).

3. The system of claim 1 wherein the first information includes information provided by the electronic device manufacturing system (100).

4. The system of claim 1 wherein the one or more parameters includes a predictive solution.

5. The system of claim 1 wherein the abatement system (106) is a plasma abatement system (106).

6. The system of claim 1 wherein the abatement system (106) is a catalytic abatement system (106).

7. The system of claim 1 wherein the abatement system (106) is a combustion abatement system (106).

8. The system of claim 1 wherein the first information comprises information provided by the process chamber (108).

9. The system of claim 1 wherein the first information comprises information provided by the abatement system (106).

10. A method comprising:
receiving first information with an abatement system (106) of an electronic device manufacturing system (100) wherein the first information relates to an effluent having an undesirable material; and
receiving the effluent with the abatement system (106);
receiving second information from one or more databases; and
utilizing the second information, developed with a reference electronic device manufacturing system different from the electronic device manufacturing system (100) to determine one or more parameters for operation of the abatement system (106).

11. The method of claim 10 wherein the second information related to an undesirable material includes a predictive solution.

12. The method of claim 10 wherein the second information is provided to an interface (118).

13. The method of claim 12 further comprising providing operational information related the electronic device manufacturing system (100) to the interface (118).

14. The method of claim 10 further comprising attenuating the undesirable material with the abatement system (106).

15. The method of claim 14 wherein attenuating the undesirable material with the abatement system (106) includes reacting the undesirable material with reactants.

## Patentansprüche

1. Elektronisches Geräteherstellungssystem (100), umfassend:
eine Verarbeitungskammer (108);
eine Schnittstelle (118); und
ein Verminderungssystem (106),
wobei die Verarbeitungskammer (108) eingerichtet ist, Prozesse durchzuführen, die ein unerwünschtes Material enthaltende Abwässer erzeugen;
wobei das Verminderungssystem (106) eingerichtet ist, das Abwasser zu empfangen, und das unerwünschte Material zu vermindern;
wobei die Schnittstelle (118) eingerichtet ist, erste Information über das elektronische Geräteherstellungssystem (100) zu analysieren, und eingerichtet ist, von einem Bezugssystem zur Herstellung elektronischer Geräte, das sich von dem elektronischen Geräteherstellungssystem (100) unterscheidet, abgeleitete zweite Informationen zu nutzen, um einen oder mehrere Parameter für den Betrieb des elektronischen Geräteherstellungssystems (100) zu bestimmen, wobei die Schnittstelle (118) eingerichtet ist, die zweiten Informationen von einer oder von mehreren Datenbanken zu empfangen; und
wobei das elektronische Geräteherstellungssystem (100) eingerichtet ist, unter Einsatz des einen oder der mehreren von der Schnittstelle (118) bestimmten Parameter betrieben zu werden.

2. System nach Anspruch 1, wobei das Verminderungssystem (106) eingerichtet ist, das unerwünschte Material unter Einsatz des einen oder der mehreren von der Schnittstelle (118) bestimmten Parameter zu vermindern.

3. System nach Anspruch 1, wobei die ersten Informationen von dem elektronischen Geräteherstellungssystem (100) bereitgestellte Informationen umfassen.

4. System nach Anspruch 1, wobei der eine oder die mehreren Parameter eine prädiktive Lösung beinhalten.

5. System nach Anspruch 1, wobei das Verminderungssystem (106) ein Plasma-Verminderungssystem (106) ist.

6. System nach Anspruch 1, wobei das Verminderungssystem (106) ein katalytisches Verminderungssystem (106) ist

7. System nach Anspruch 1, wobei das Verminderungssystem (106) ein Verbrennungs-Verminderungssystem (106) ist.

8. System nach Anspruch 1, wobei die ersten Informationen von der Verarbeitungskammer (108) bereitgestellte Informationen umfassen.

9. System nach Anspruch 1, wobei die ersten Informationen von dem Verminderungssystem (106) bereitgestellte Informationen umfassen.

10. Verfahren, umfassend:
Empfangen erster Informationen mit einem Verminderungssystem (106) eines elektronischen Geräteherstellungssystems (100), wobei sich die ersten Informationen auf ein unerwünschtes Material enthaltendes Abwasser beziehen; und
Empfangen des Abwassers mit dem Verminderungssystem (106);
Empfangen zweiter Informationen von einer oder von mehreren Datenbanken; und
Nutzen der zweiten mit einem Bezugssystem zur Herstellung elektronischer Geräte, das sich von dem elektronischen Geräteherstellungssystem (100) unterscheidet, entwickelten Informationen, um einen oder mehrere Parameter für den Betrieb des Verminderungssystems (106) zu bestimmen.

11. Verfahren nach Anspruch 10, wobei die zweiten auf ein unerwünschtes Material bezogenen Informationen eine prädiktive Lösung beinhaltet.

12. Verfahren nach Anspruch 10, wobei die zweiten Informationen an einer Schnittstelle (118) bereitgestellt werden.

13. Verfahren nach Anspruch 12, ferner umfassend das Bereitstellen betrieblicher Informationen bezüglich des elektronischen Geräteherstellungssystems (100) an die Schnittstelle (118).

14. Verfahren nach Anspruch 10, ferner umfassend das Vermindern des unerwünschten Materials mit dem Verminderungssystem (106).

15. Verfahren nach Anspruch 14, wobei das Vermindern des unerwünschten Materials mit dem Verminderungssystem (106) das Umsetzen des unerwünschten Materials mit Reaktanten umfasst.

## Revendications

1. Système de fabrication de dispositifs électroniques (100) comprenant :
une chambre de traitement (108) ;
une interface (118) ; et
un système de réduction de la pollution (106),
la chambre de traitement (108) étant adaptée de manière à exécuter des processus qui produisent des effluents comprenant une matière indésirable ;
le système de réduction de la pollution (106) étant adapté de façon à recevoir l'effluent ; et à atténuer la matière indésirable ;
l'interface (118) étant adaptée de façon à analyser une première information sur le système de fabrication de dispositifs électroniques (100) et étant adaptée de façon à utiliser une deuxième information provenant d'un système de fabrication de dispositifs électroniques de référence différent du système de fabrication de dispositifs électroniques (100), afin de déterminer un ou plusieurs paramètres pour le fonctionnement du système de fabrication de dispositifs électroniques (100), l'interface (118) étant adaptée de façon à recevoir la deuxième information d'une ou de plusieurs bases de données ;
et
le système de fabrication de dispositifs électroniques (100) étant adapté de façon à fonctionner en utilisant le ou les paramètres qui ont été déterminés par l'interface (118).

2. Système selon la revendication 1, dans lequel le système de réduction de la pollution (106) est adapté de façon à atténuer la matière indésirable en utilisant le ou les paramètres qui ont été déterminés par l'interface (118).

3. Système selon la revendication 1, dans lequel la première information comprend une information fournie par le système de fabrication de dispositifs électroniques (100).

4. Système selon la revendication 1, dans lequel le ou les paramètres comprennent une solution prédictive.

5. Système selon la revendication 1, dans lequel le système de réduction de la pollution (106) est un système de réduction de la pollution par plasma (106).

6. Système selon la revendication 1, dans lequel le système de réduction de la pollution (106) est un système catalytique de réduction de la pollution (106).

7. Système selon la revendication 1, dans lequel le système de réduction de la pollution (106) est un système de réduction de la pollution par combustion (106).

8. Système selon la revendication 1, dans lequel la première information comprend une information fournie par la chambre de traitement (108).

9. Système selon la revendication 1, dans lequel la première information comprend une information fournie par le système de réduction de la pollution (106).

10. Procédé comprenant :
la réception d'une première information avec un système de réduction de la pollution (106) d'un système de fabrication de dispositifs électroniques (100), cette première information se rapportant à un effluent ayant une matière indésirable ; et
la réception de l'effluent avec le système de réduction de la pollution (106) ;
la réception de la deuxième information provenant d'une ou de plusieurs bases de données ; et
l'utilisation de la deuxième information, développée avec un système de fabrication de dispositifs électroniques de référence différent du système de fabrication de dispositifs électroniques (100) afin de déterminer un ou plusieurs paramètres pour le fonctionnement du système de réduction de la pollution (106).

11. Procédé selon la revendication 10, dans lequel la deuxième information se rapportant à une matière indésirable comprend une solution prédictive.

12. Procédé selon la revendication 10, dans lequel la deuxième information est fournie à une interface (118).

13. Procédé selon la revendication 12, comprenant en outre la fourniture à l'interface (118) d'une information de fonctionnement se rapportant au système de fabrication de dispositifs électroniques (100).

14. Procédé selon la revendication 10, comprenant en outre l'atténuation de la matière indésirable avec le système de réduction de la pollution (106).

15. Procédé selon la revendication 14, dans lequel l'atténuation de la matière indésirable avec le système de réduction de la pollution (106) comprend le fait de faire réagir la matière indésirable avec des réactifs.
